# EUROPÄISCHE PATENTSCHRIFT

(11) **EP 2 502 332 B1**
(45) Veröffentlichungstag und Bekanntmachung des Hinweises auf die Patenterteilung: **06.04.2016**
(21) Anmeldenummer: 10794858.0
(22) Anmeldetag: 26.10.2010
(51) Int. Cl.: H02K 3/52

(54) **STATORBAUEINHEIT, INSBESONDERE FÜR MEHRPHASIGE ELEKTRISCHE MASCHINEN UND VERFAHREN ZUR HERSTELLUNG EINER DERARTIGEN STATORBAUEINHEIT**
STATOR MODULE, IN PARTICULAR FOR MULTI-PHASE ELECTRIC MACHINES, AND METHOD FOR PRODUCING SUCH A STATOR MODULE
UNITÉ MODULAIRE STATORIQUE, NOTAMMENT POUR MACHINES ÉLECTRIQUES POLYPHASÉES, ET PROCÉDÉ DE PRODUCTION D'UNE UNITÉ MODULAIRE STATORIQUE DE CE TYPE

(30) Priorität: 16.11.2009 DE 102009053484; 21.12.2009 DE 102009059737
(43) Veröffentlichungstag der Anmeldung: 26.09.2012
(73) Patentinhaber: Schaeffler Technologies AG & Co. KG, 91074 Herzogenaurach (DE)
(72) Erfinder: HILL, Wolfgang, 76135 Karlsruhe (DE)
(86) Internationale Anmeldenummer: PCT/DE2010/001250
(87) Internationale Veröffentlichungsnummer: WO 2011/057599

(56) Entgegenhaltungen:
- WO-A2-2009/019309
- US-A1- 2004 051 417
- US-A1- 2006 022 544
- US-A1- 2007 182 271
- US-A1- 2011 020 154

## Beschreibung

Die Erfindung betrifft eine Statorbaueinheit für mehrphasige elektrische Maschine, im Einzelnen mit den Merkmalen aus dem Oberbegriff von Anspruch 1.

Elektrische Maschinen, insbesondere Drehfeldmaschinen, sind in den unterschiedlichsten Ausführungen und für unterschiedliche Einsatzzwecke aus dem Stand der Technik vorbekannt. Derartige Drehfeldmaschinen finden unter anderem als Stellmotoren in automatisierten Getrieben Anwendung. Diese müssen dabei eine hohe Leistungsdichte bei geringem Bauraumbedarf aufweisen. An die Herstellung der Statorbaueinheit sind dadurch sehr hohe Anforderungen hinsichtlich des erforderlichen Bauraumes gestellt. Bezüglich der Herstellung derartiger Statorbaueinheiten sind unterschiedliche Verfahren denkbar. Die erste Möglichkeit geht von Polen in Form einzelner Statorsegmente mit um diese gewickelten Einzelspulen aus, wobei die derart bewickelten Statorsegmente in hohen Stückzahlen vorgefertigt vorgehalten werden können und bei Bedarf zur Statorbaueinheit kombiniert werden können.

Segmentierte Ausführungen von Statorbaueinheiten aus einzelnen Statorsegmenten sind beispielsweise aus der Druckschrift DE 10 2009 004 391 A1 vorbekannt. Eine aus diesen aufgebaute Statorbaueinheit verfügt über einen hohen Nutfüllfaktor, da die Bewicklung bereits in vorgefertigten Einheiten erfolgt und der Platzbedarf für das Wickelwerkzeug nicht berücksichtigt werden muss. Der Nachteil dieser Bauform besteht darin, dass pro Statorsegment zwei Kontaktstellen entstehen und somit bei einem Stator mit einer bestimmten Anzahl derartiger Segmente eine entsprechende Anzahl an Phasenanschlüssen und insbesondere eine hohe Anzahl an Kontakten über Verschaltungseinheiten verschaltet werden müssen. Eine weit verbreitete Lösung zur Verschaltung der Spulen einzeln bewickelter Statorsegmente ist der Einsatz von Verschaltungselementen, die als Stanzeile an Trägerstrukturen montiert oder vorumspritzt an die Stirnseite des Wickelkopfes der Spule gefügt werden. Bei kleinen Strömen finden auch Leiterplatten als Verschaltungselemente Anwendung. Speziell ausgeformte Tragkörper beziehungsweise Spulenkörper aus Kunststoff unterstützen die Verschaltung, indem diese Leiterelemente positionieren und fixieren. Diese Verschaltungseinheiten benötigen Raum und verursachen Kosten.

Ferner bedingt die hohe Anzahl an Kontakten eine entsprechend hohe Anzahl an Fügeoperationen zur Verbindung mit den Verschaltungseinheiten. Jede einzelne Fügeverbindung stellt dabei eine potentielle Fehlerquelle bei der Herstellung als auch später im Betrieb dar.

Aus der Druckschrift DE 10 2008 061 421 A1 ist beispielhaft ein zentrales Elektrizitätsverteilungsglied für eine elektrische Drehfeldmaschine vorbekannt, welches den einzelnen Phasen zugeordnete Sammelschienen zum Verbinden von im Stator der elektrischen Maschine angeordneten Spulen der gleichen Phasen besitzt, und eine Sammelschiene im Isolierabschnitt, die eine kreisförmige Haltenut zum Aufnehmen einer jeweiligen Sammelschiene und dem Isolieren der jeweiligen Sammelschienen voneinander aufweist.

Aus US 2007/182271, US 2004/051417, US 2006/022544 und WO 2009/019309 sind weitere Statorbaueinheiten bekannt.

Wird die Anordnung der Verschaltung im Bereich des Jochs, welches als Ring oder bei segmentierter Ausführung durch die einzelnen Statorsegmente quasi mit gebildet wird, vorgenommen, ist diese auf Motoren mit sehr hohen Windungszahlen und damit dünnen Wicklüngsdrähten beschränkt. Bei einer Mehrzahl von Anwendungsfällen sind jedoch die Windungszahlen eher gering und die Wicklungsdrähte durch eine größere Stärke und damit Durchmesser oder andere Abmessung charakterisiert. In Motoren mit höherer Polzahl reicht der Bauraum vor dem Joch für die erforderliche Verschaltung nicht mehr aus, weshalb die Verschaltung der einzelnen Polspulen axial vor den Spulenköpfen erfolgen muss und entsprechenden Bauraum benötigt. Des Weiteren ist in Fällen, in denen die Statorbaueinheit von der Verschaltungsseite in ein Gehäuse eingepresst wird, aufgrund des beim Einpressen erhöhten Platzbedarfs eine Verschaltung im Jochbereich nicht möglich.

Ferner sind Verfahren bekannt, mit welchen mehrere Pole einer Phase am Stück bewickelt werden. Dazu werden in der Regel Fixierpunkte an den Stirnseiten der Spulenkörper festgelegt, die bei der Verlegung der Wicklung als Umlenkpunkte dienen und/oder die Spulenenden fixieren. Die Verlegung des Wickeldrahtes um die Umlenkpunkte benötigt dabei ebenfalls viel Bauraum und führt zu einer Erhöhung der Leiterlänge und Wicklungsverlusten.

Eine alternative Ausführung besteht darin, eine ringförmige Statorbaueinheit aus einer abgewickelten Blechpaketeinheit zu bilden, wobei die aufgeklappten Nuten mit einer Wickelnadel fortlaufend bewickelt werden und im Anschluss daran die Abwicklung aufgehoben und die Verbindungsstrecken der Wickeldrähte mit Hilfe von Verschaltungselementen axial vor den Spulenköpfen geführt werden.

Beim Bewickeln mehrerer Statorsegmente mit einer Wickelnadel benötigt das Wickelwerkzeug ausreichend Arbeitsraum im vordefinierten Nutbereich. Die Spulen sind dadurch nicht in der Lage, den Nutraum entsprechend zu füllen, wodurch derartige Ausführungen durch einen kleinen Nutfüllfaktor charakterisiert sind. Die benachbarten polbildenden Statorsegmente werden beim Wickeln mit vergrößertem Abstand angeordnet, wodurch die Verbindungen zwischen den einander in Umfangsrichtung benachbart angeordneten Spulen eine Überlänge aufweisen, die in der endgültigen Statorbaugruppe durch einen erhöhten Raumbedarf für die Anordnung und Fixierung charakterisiert sind und die Verluste der Verschaltung erhöhen.

Ferner sind einige der bekannten Wickelverfahren nur für spezielle Polanordnungen anwendbar, indem die Winkelanordnung aufeinanderfolgender Spulen mindestens 90 Grad beträgt.

Einer Vielzahl der bekannten Ausführungen gemeinsam ist, dass diese zur Verschaltung zwischen den Segmenten einer Phase und den einzelnen Phasen untereinander zusätzlichen Bauraum in axialer Richtung vor oder hinter der Statorbaueinheit benötigen. Die erforderliche zusätzliche Baulänge in axialer Richtung beträgt dabei häufig ein Mehrfaches des Wickeldrahtdurchmessers. Ferner sind die entsprechenden Verbindungselemente zur Kopplung beziehungsweise Ausbildung der elektrischen Verbindungen entsprechend groß und erhöhen den Strangwiderstand und damit die Wicklungsverluste.

Ein weiterer wesentlicher Nachteil der bekannten Ausführungen besteht darin, dass neben dem zusätzlichen Bauraumbedarf der Herstellungsaufwand sowie der Aufwand zur Realisierung der Verbindungen zwischen den einzelnen Spulenenden und den Verschaltungselementen selbst sehr groß ist.

Der Erfindung liegt daher die Aufgabe zugrunde, eine Statorbaueinheit für eine elektrische Maschine mit einzeln bewickelten jeweils polbildenden Statorsegmenten derart weiterzuentwickeln, dass die erforderliche Baulänge der Statorbaueinheit in axialer Richtung inklusive der erforderlichen Verschaltung kurz und der Wicklungswiderstand für die Wicklungen einer Phase niedrig gehalten werden kann. Die Herstellung soll in größeren Serien mit minimalem Kostenaufwand möglich sein und nach Möglichkeit automatisiert erfolgen.

Die erfindungsgemäße Lösung ist durch die Merkmale des Anspruchs 1 charakterisiert. Vorteilhafte Ausgestaltungen sind jeweils in den Unteransprüchen beschrieben.

Eine Statorbaueinheit für mehrphasige Maschinen mit einer Vielzahl von in Umfangsrichtung zueinander beabstandet unter Ausbildung von Nuten angeordneten und ein Joch bildende oder mit einem Joch verbindbaren einzelnen, mit Spulen bewickelten weichmagnetischen Statorsegmenten, wobei mindestens zwei Spulen einer Phase in Reihe geschaltet sind, ist dadurch gekennzeichnet, dass wenigstens zwei Statorsegmente einer Phase mindestens eine Statorsegmentkette bilden wobei, deren Spulen und die Verbindung der Spulen untereinander von zumindest einem durchgängigen Wickeldraht gebildet werden. Dadurch gelangen innerhalb der Statorsegmentkette lediglich ein durchgängiger Wickeldraht oder mehrere parallelgewickelte Wickeldrähte zum Einsatz, welche am Anfangs- und am Endbereich entsprechende Anschlüsse aufweisen, die für die Kontakte mit den Zuleitungen erforderlich sind. In Abhängigkeit der Anzahl derartiger Statorsegmentketten kann damit die Anzahl der zu realisierenden Kontaktstellen in der Statorbaugruppe bis auf die Phasenanzahl minimiert werden. Ferner besteht die Möglichkeit, mit der erfindungsgemäßen Lösung die einzelnen Statorsegmentketten vorgefertigt vorzuhalten und die vollständigen Statorsegmentketten dann gegenüber einem entsprechenden Joch oder einem Gehäuse zu positionieren und auszurichten beziehungsweise bei Ausbildung des Jochs durch die einzelnen Statorsegmente diese entsprechend zueinander auszurichten. Aufgrund der Durchgängigkeit der Wicklung entfallen sonst erforderliche Fügestellen der einzelnen in Reihe geschalteten Spulen einer Phase, für die nachträgliche Verschalung erforderliche Verbindungselemente und der für die Anordnung dieser erforderliche Bauraum. Die erfindungsgemäße Statorbaueinheit ist somit durch eine kurze axiale Länge charakterisiert.

In vorteilhafter Weise werden zumindest zwei Statorsegmente einer Statorsegmentkette in Umfangsrichtung einander unmittelbar benachbart angeordnet, wobei die Spulen dieser Statorsegmente einen gegenläufigen Wickelsinn aufweisen und die Verbindung zwischen den Spulen durch eine kurze Verbindungsstrecke erster oder zweiter Art beschreibbar ist. Die Unterscheidung zwischen Verbindungsstrecken erster und zweiter Art erfolgt in Abhängigkeit der Lage des Spulenendes der vorgeordneten Spule eines Phasenstranges. Endet die Spule am vorgeordneten Statorsegment in der gemeinsamen Nut zur im Phasenstrang nachgeordneten Spule kann eine besonders kurze Verbindung erzielt werden. Bei dieser Verbindungsstrecke erster Art handelt es sich um eine sogenannte kurze Kurzverbindung zwischen den einander benachbart angeordneten Spulen, die durch Führung des Wickeldrahtes vom Spulenende vor der gemeinsamen Nut der im Phasenstrang vorgeordneten Spule zum Anfang der im Phasenstrang nachgeordneten Spule realisiert wird, indem der Draht in den radial verlaufenden Verbindungsstrecken im Raum der Vertiefung zwischen den Spulenköpfen der benachbarten Spulen angeordnet ist.

Die Verbindung zur im Phasenstrang nachgeordneten Spule als Verbindungsstrecke zweiter Art ist länger und verläuft zunächst über den Spulenkopf der vorgeordneten Spule, da die letzte Windung der vorgeordneten Spule nach dem Durchgang durch die Grenznut mit einem anderen benachbarten Statorsegment endet. Der Drahtverlauf der Verbindungsstrecke wird dann in der Vertiefung zwischen den beiden Spulenköpfen in den Joch- oder Kopfbereich geführt und von dort zum Anfang der im Phasenstrang nachgeordneten Spule.

Die tangential verlaufenden Teile der Verbindungsstrecken liegen entweder axial vor dem Jochbereich oder axial vor dem Polschuhbereich der Statorbaugruppe.

Ferner besteht optional oder zusätzlich die Möglichkeit, zumindest einen Teil der Statorsegmente einer Statorsegmentkette in Umfangsrichtung um mehr als ein Statorsegment beabstandet zueinander anzuordnen, wobei der Versatz vorzugsweise 180 Grad beträgt. Werden Teile der Statorsegmente einer Statorsegmentkette in Umfangsrichtung zueinander versetzt angeordnet, bilden die einzelnen Teile Statorsegmentgruppen. Die einzelne Statorsegmentgruppe wird aus jeweils zumindest einem Statorsegment, vorzugsweise einer Mehrzahl von Statorsegmenten gebildet. Die Verbindung zwischen den Statorsegmentgruppen wird durch eine lange Verbindungsstrecke erster oder zweiter Art beschrieben, wobei diese lange Verbindungsstrecke sich über wenigstens ein oder eine Vielzahl von zwischengeordneten Statorsegmenten erstreckt. In besonders vorteilhafter Weise umfassen dabei die einzelnen Statorsegmentgruppen Statorsegmentpaare mit zwei in Umfangsrichtung einander benachbart angeordneten Statorsegmenten, wobei hier der Wickelsinn zwischen den Statorsegmenten eines Statorsegmentpaares, wie bereits beschrieben, gegenläufig erfolgt. Jede der einzelnen Statorsegmentgruppen kann auch aus mehr als zwei Statorsegmenten bestehen, wobei hier ebenfalls die Aussage betreffend des Wickelsinns hinsichtlich einander in Umfangsrichtung benachbarter Statorsegment gilt. Über die langen Verbindungsstrecken besteht die Möglichkeit der Kopplung von Statorsegmenten eines Phasenstranges, die an unterschiedlichen Orten am Umfang der Statorbaugruppe angeordnet und befestigt werden. Durch die Möglichkeit der Schaffung von Statorsegmentketten, welche durch die Verbindung der Spulen einander in Umfangsrichtung benachbarter Statorsegmente charakterisiert sind, ergibt sich die Möglichkeit der Schaffung von Statorsegmentketten, die sich über einen sehr großen Erstreckungsbereich in Umfangsrichtung einer Statorbaugruppe erstrecken können, frei von Fügestellen zwischen den einzelnen Spulen der einzelnen Statorsegmente sind und lediglich am Anfang- und am Endbereich der einzelnen Statorsegmentkette durch einen entsprechenden Anschluss charakterisiert sind. Dadurch können bei alleiniger Verwendung von kurzen Verbindungsstrecken erster oder zweiter Art sehr kompakte Statorsegmentketten vorgefertigt und vorgehalten werden und in einfacher Art und Weise später zu einer Statorbaugruppe montiert werden. In Analogie gilt dies auch für die Statorsegmentketten mit langen Verbindungen oder einer Kombination aus kurzen und langen Verbindungen.

In einer vorteilhaften Ausführung kann eine Kombination von Statorsegmentketten zum Einsatz gelangen, die durch die Anordnung und Ausbildung von Statorsegmenten mit miteinander gekoppelten Spulen mit kurzen Verbindungen und mit langen Verbindungen charakterisiert sind.

In einer alternativen Ausführung ist es denkbar, die Statorbaueinheit nur aus Statorsegmentketten mit kurzen Verbindungen auszubilden.

Um den erforderlichen Bauraum in axialer Richtung möglichst gering zu halten sind vorzugsweise die Verbindungsstrecken zwischen zwei aufeinanderfolgenden Einzelspulen zur Stirnfläche der weichmagnetischen Statorsegmente im wesentlichen durch einen axialen Abstand charakterisiert, der den maximalen Abstand der äußeren Spulenkopfoberfläche um weniger als eine Drahtstärke übertrifft.

In besonders vorteilhafter Weise werden die Verbindungsstrecken zwischen zwei aufeinanderfolgenden Spulen einer Statorsegmentkette zur Stirnfläche der einzelnen Statorsegmente in einem Abstand in axialer Richtung angeordnet, welcher höchstensmaximal dem maximalen Abstand der Spulenkopfoberfläche entspricht. Dadurch werden die Verbindungen in den axialen Spulenkopfbereich verlegt und benötigen keinen zusätzlichen Bauraum in axialer Richtung. Letztere Möglichkeit ist durch eine geringe insbesondere weitgehende Vermeidung der Erstreckung der Verbindungsstrecken in axialer Richtung außerhalb der Spulenköpfe charakterisiert.

Um nach Möglichkeit die Verbindungen in die Statorbaueinheitsebene direkt zu verlagern, ist es vorgesehen, zumindest einen Teilbereich der die Verbindung zwischen zwei Spulen einer Statorsegmentkette beschreibenden Verbindungsstrecke zumindest teilweise in radialer Richtung in einer Vertiefung zwischen zwei in Umfangsrichtung aufeinanderfolgend angeordneten Spulenköpfen anzuordnen. Dadurch besteht die Möglichkeit, die Führung der kurzen Verbindungsstrecke der ersten und zweiten Art noch innerhalb des Abstandes zwischen zwei parallelen durch den Außendurchmesser der Spulenköpfe beschreibbaren Ebenen beziehungsweise in den axialen Bereich der Erstreckung der Spulen zu verlagern. Eine derartige Führung des Drahtverlaufs erfolgt vor allem in dem Fall, in welchem die letzte Windung radial nicht am Rand aus der Nut herausläuft. Ist dies nicht der Fall und das Spulenende endet am radial äuβeren oder inneren Rand der Nut, so wird der Draht in tangential verlaufenden Verbindungsstrecken axial vor dem Joch- oder Polschuhbereich der Statorbaugruppe geführt.

Grundsätzlich werden beim Verlauf der Verbindungsstrecken in tangentialer Richtung und in axialer Richtung innerhalb der Erstreckung der Windungen der äußeren Lagen von Spulen verlaufender Wickeldrähte zwei Möglichkeiten unterschieden, wobei die erste durch den Auslauf des Spulenendes der in Wickelrichtung vorgeordneten Spule aus der gemeinsamen Nut mit dem in Umfangsrichtung nachfolgenden Statorsegment und der diese umgebenden Spule charakterisiert ist. Die zweite Ausführung ist durch den Auslauf des Spulenendes der in Wickelrichtung vorgeordneten Spule aus der nicht gemeinsamen Nut und dem Verlauf des Drahtes über den Spulenkopf zur Vertiefung der Spulenköpfe vor der in der gemeinsamen Nut charakterisiert. Insbesondere für die Anordnung der langen Verbindungsstrecken erfolgt der charakterisierende Wickeldrahtverlauf entlang der einzelnen in Umfangsrichtung angeordneten Statorsegmente derart, dass der zur Verfügung stehende Raum an den einzelnen Spulen selbst, bedingt durch die Wickelart und durch den Raum der von Windungen der Oberlage gegenüber der Unterlage frei bleibt, zur Führung des Wickeldrahtes genutzt wird. Insbesondere wird der Bereich der Spule genutzt, der frei von Windungen der Oberlage ist. Auch hier kann dadurch die lange Verbindung in die Anordnungsebene der einzelnen Spulen verlagert werden.

Die Enden der Statorsegmentketten, die eine Wicklung bilden, sind vorzugsweise gleichmäßig in Umfangsrichtung über den Umfang verteilt angeordnet und die Anzahl der Endenpaare entspricht der Phasenzahl oder einem mehrfachen der Phasenanzahl. Vorzugsweise wird angestrebt, dass nach Möglichkeit alle bewickelten Statorsegmente einer Phase in einer Statorsegmentkette angeordnet sind.

Die Kreuzungspunkte zwischen den langen Verbindungsstrecken liegen im Bereich der Vertiefung zwischen zwei Spulenköpfen von unterschiedlichen Statorsegmentgruppen. Dadurch besteht die Möglichkeit, an den Kreuzungspunkten den näher am weichmagnetischen Statorsegment verlaufenden Wickeldraht vom därüberliegenden Wickeldraht in die Vertiefung zu drücken, so dass der untere Drahtverlauf axial verformt wird und der obere Drahtverlauf im Abstand, der dem Abstand der äußeren Lage im Spulenkopf entspricht, verlaufen kann.

Als Wickeldraht findet vorzugsweise ein Runddraht Verwendung. Die Wicklung der einzelnen Spulen selbst erfolgt zur Erzielung einer hohen Fülldichte in vorteilhafter Weise orthozyklisch.

Das Verfahren ist im Wesentlichen durch die Verfahrensschritte, die nachfolgend beschrieben werden, bestimmt.
- Bereitstellung von einzelnen isolierten Statorsegmentkernen und eines diese aufnehmenden Gehäuses;
- Positionierung der Statorsegmente einer Statorsegmentkette an einem Wickelwerkzeug;
- Erzeugung der Spulen der Statorsegmentkette aus einem Wickeldraht;
- Positionierung der Statorsegmentketten aller Phasen zu einem Ring und Ausrichtung/Befestigung.

Bezüglich des Wickelverfahrens sind unterschiedliche Möglichkeiten denkbar. Diese sind im Wesentlichen dadurch charakterisiert, dass entweder die zu bewickelnden Statorsegmente ortsfest angeordnet sind und der Wickeldraht geführt wird, beispielsweise mittels einer Wickelnadel oder das Statorsegment gegenüber dem Wickeldraht bewegt wird. Beide Möglichkeiten sind auch beim Bewickeln der Statorsegmentketten realisierbar. Mit der erstgenannten Möglichkeit können jedoch grundsätzlich besonders kompakte Statorsegmentpaare geschaffen werden, das heißt Statorsegmente, die in Einbaulage in Umfangsrichtung unmittelbar aufeinanderfolgend angeordnet sind. Das für den Wickelvorgang eingesetzte Wickelwerkzeug umfasst eine Trageinrichtung mit zumindest zwei unterschiedlichen Aufnahme- beziehungsweise , Tragachsen für die Statorsegmente, wobei die Tragachse zur Bewicklung des in der Statorsegmentkette folgenden Statorsegmentes gegenüber der Tragachse des vorgeordneten Statorsegmentes einer Phase in einem Winkel zueinander verkippt sind und in diesem verkippten Zustand das Umwickeln unter Erzeugung der kurzen Verbindungsstrecke zwischen den Spulen der in Umfangsrichtung aufeinanderfolgenden Statorsegmente erfolgt. Dabei kann je nach Ausführung die kurze Verbindungsstrecke unmittelbar im Winkelbereich der derart positionierten Statorsegmente erzeugt werden, wobei die Verbindung dann zwischen in Einbaulage gleichen Endbereichen der Statorsegmente erfolgt oder aber unter Ausnutzung des die Verkippung charakterisierenden Winkels. Im letztgenannten Fall beschreibt die Verbindungsstrecke die Verbindung zwischen in Einbaulage in radialer Richtung unterschiedlichen Endbereichen der Statorsegmente.

Nach erfolgter Fertigstellung der Statorsegmentkette können die Statorsegmente wieder zueinander ausgerichtet und die Endposition relativ zueinander verbracht werden, was durch Verkippen der Tragachse in eine Ebene mit der Tragachse des vorgeordneten Statorsegmentes erfolgt. Dieser Vorgang kann im Rahmen der Vorfertigung oder aber durch Verkippen jeweils der Mittenachsen der Statorsegmente zueinander auch erst bei der Montage erfolgen.

Werden vorzugsweise die einzelnen Statorsegmentketten aus mehrpoligen Statorsegmentsektoren mit kurzen Verbindungen erster Art und Verbindungen zweiter Art sowie langen-Verbindungen zwischen den mehrpoligen Statorsegmentsektoren gebildet, erfolgt die Montage der einzelnen Statorsegmentketten der einzelnen Phasen nacheinander. Dabei genügt für die Ausrichtung der Statorsegmentkette der ersten zu montierenden Phase noch eine einfache Axialbewegung. Für die zweite Phase werden mehrere Bewegungen im Raum benötigt, die im Wesentlichen durch radiale und axiale Bewegungen charakterisiert sind, während für weitere Phasen die jeweiligen Bewegungsrichtungen weiter variiert werden können, wobei durch die lange Verbindung unterschiedliche Durchführungen erlaubt sind.

Die erfindungsgemäße Lösung ist für die Erstellung unterschiedlichster Statorbaueinheiten mit bewickelten Statorsegmenten und mindestens zwei Statorsegmenten pro Phase einsetzbar. Diese ist nicht auf einen bestimmten Maschinentyp bestimmte Phasen- oder Polzahlen einer mehrphasigen elektrischen Maschine beschränkt. Bei der elektrischen Maschine kann es sich um eine Innenläufer- oder eine Außenläufermaschine handeln.

Die erfindungsgemäße Lösung wird nachfolgend anhand von Figuren erläutert. Darin ist im Einzelnen Folgendes dargestellt:
- Fig. 1: verdeutlicht anhand einer Perspektivdarstellung eine vorteilhafte Ausführung einer erfindungsgemäßen Statorbaueinheit in besonders vorteilhafter Ausführung;
- Fig. 2: verdeutlicht anhand eines Ausschnittes aus Figur 1 für ein Statorsegment die Realisierung einer kurzen Verbindungsstrecke erster Art zwischen zwei in Umfangsrichtung aufeinanderfolgenden Spulen;
- Fig. 3: verdeutlicht anhand eines Ausschnittes aus Figur 1 die Ausführung der langen Verbindungsstrecke zwischen den Statorsegmenten zweier Statorsegmentgruppen einer Statorsegmentkette;
- Fig. 4: verdeutlicht beispielhaft die Anordnung der einzelnen Statorsegmente zur Bewicklung;
- Fig. 5: verdeutlicht beispielhaft die sich ergebende Anordnung und Verschaltung der Spulen der Statorsegmentkette B in Funktionslage;
- Fig. 6: verdeutlicht anhand eines Prozessflussbildes den Ablauf eines Verfahren zur Herstellung einer Statorbaueinheit.

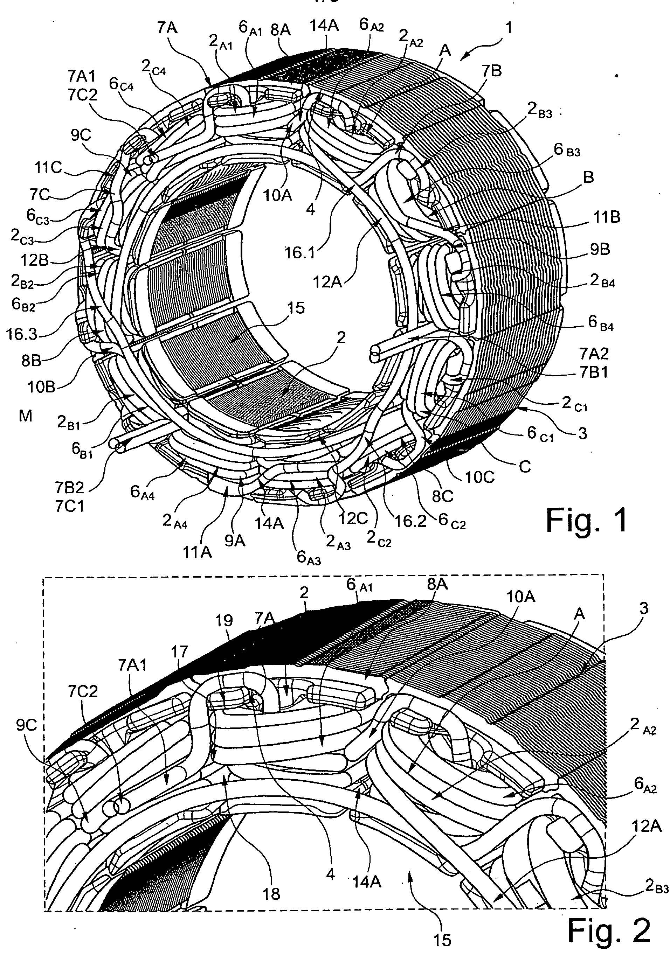

Die Figur 1 verdeutlicht in schematisiert vereinfachter Darstellung anhand einer perspektivischen Darstellung den Grundaufbau einer erfindungsgemäß ausgeführten Statorbaueinheit 1 für den Einsatz in elektrischen Drehfeldmaschinen. Derartige Maschinen finden bevorzugt als Stellmotoren in automatisierten Getrieben Anwendung und sind daher aufgrund des zur Verfügung stehenden Bauraumes durch eine hohe Leistungsdichte charakterisiert. Die elektrische Drehfeldmaschine kann mit einem Außen- oder Innenläufer ausgebildet sein, wobei die in der Figur 1 dargestellte Statorbaueinheit 1 in einer elektrischen Drehfeldmaschine mit Innenläufer eingesetzt wird.

Die Statorbaueinheit 1 umfasst eine Vielzahl von Statorsegmenten 2, welche auch als Pole bezeichnet werden und aus einem Zahn- und Jochbereich 3 bestehen. Die einzelnen Statorsegmente 2 bilden am Umfang Winkelsektoren der Statorbaugruppen und stoßen im Jochbereich 3 aneinander, wobei im dargestellten Fall die Statorsegmente etwa in der Nutmitte eine Stossstelle 4 ausbilden. Die einzelnen Statorsegmente 2 sind in Umfangsrichtung der Stator baueinheit 1 einander benachbart unter Ausbildung von Nuten angeordnet und bestehen aus einem weichmagnetischen Material. Die Befestigung des Jochs 3 in einem Gehäuse erfolgt vorzugsweise durch Einpressen der vormontierten Statorbaugruppe in eine hier nicht dargestellte.Gehäusehülse, wobei hier auf eine Vielzahl von Möglichkeiten verwiesen werden kann, welche einen einfachen Einbau und Austausch der einzelnen Statorsegmente 2 erlauben. Je nach mehrphasiger Ausbildung der elektrischen Maschine sind die einzelnen Statorsegmente 2 in Statorsegmentketten angeordnet, die hier mit A bis C bei Ausführung als Statorbaueinheit 1 für eine dreiphasige Drehfeldmaschine bezeichnet sind. Dabei ist jeweils eine Statorsegmentkette A bis C einer Phase zugeordnet. Jede der Statorsegmentketten A bis C besteht aus zumindest zwei Statorsegmenten, die unter Ausbildung von Spulen 6 gewickelt sind, wobei die einzelnen Spulen einer Statorsegmentkette A bis C jeweils in Reihe geschaltet sind und erfindungsgemäß von einem durchgängigen Wickeldraht 7A bis 7C gebildet sind, das heißt frei von Fügestellen. Anstatt nur eines Drahtes können auch zwei oder mehrere Drähte parallel gewickelt werden. Im dargestellten Fall umfasst die Statorbaueinheit 1 beispielhaft zwölf Pole bildende Statorsegmente 2, wobei einer Statorsegmentkette A bis C jeweils vier derartige Statorsegmente zugeordnet sind. Die Statorsegmente der Statorsegmentkette A sind hier mit 2A1 bis 2A4 bezeichnet, die Statorsegmente der Statorsegmentkette B mit 2B1 bis 2B4 und die Statorsegmente der Statorsegmentkette C mit 2C1 bis 2C4 gekennzeichnet. Jedes Statorsegment 2A1 bis 2C4 ist dabei mit einer Spule 6A1 bis 6C4 bewickelt. Die einzelnen Spulen 6A1 bis 6A4 einer Phase A sind in Reihe geschaltet und werden durch einen durchgängigen Wickeldraht 7A frei von Fügestellen und Unterbrechungen oder erforderlichen Verbindungen gebildet. In Analogie gilt dies auch für die den Statorsegmenten 2B1 bis 2B4 und 2C1 bis 2C4 zugeordneten Spulen 6B1 bis 6B4, 6C1 bis 6C4. Letztere werden jeweils von den Wickeldrähten 7B und 7C gebildet. Jede der Statorsegmentketten A bis C ist durch zwei Statorsegmentgruppen, in der in Figur 1 dargestellten Ausführung in Form von Statorsegmentpaaren 8A, 9A beziehungsweise 8B, 9B und 8C, 9C charakterisiert. Die einzelnen Statorsegmente einer Statorsegmentgruppe, insbesondere Statorsegmentpaares einer Statorsegmentkette A bis C sind paarweise in Umfangsrichtung unmittelbar einander benachbart angeordnet. Innerhalb der Statorsegmentkette A bilden die Statorsegmente 2A1, 2A2 das Statorsegmentpaar 8A, während das Statorsegmentpaar 9A von den Statorsegmenten 2A3 und 2A4 gebildet wird. In Analogie gilt dies auch für die Statorsegmentpaare 8B und 9B, welche jeweils aus Statorsegmenten 2B1, 2B2 und 2B3, 2B4 bestehen sowie die Statorsegmentpaare 8C und 9C, die jeweils von Statorsegmenten 2C1, 2C2 und 2C3, 2C4 gebildet werden und die diesen zugeordneten Spulen 6A1 bis 6C4.

Die einzelnen Statorsegmente eines Statorsegmentpaares, hier 2_{A1}, 2_{A2} des Statorsegmentpaares 8A, 2_{B1}, 2_{B2} des Statorsegmentpaares 8B, 2_{C1}, 2_{C2} des Statorsegmentpaares 8C sowie 2_{A3}, 2_{A4} des Statorsegmentpaares 9A, 2_{B3}, 2_{B4} des Statorsegmentpaares 9B und 2_{C3}, 2_{C4} des Statorsegmentpaares 9C sind dabei hinsichtlich ihrer Spulen 6_{A1}, 6_{A2} für 8A, 6_{B1}, 6_{B2} für 8B und 6_{C1}, 6_{C2} für 8C jeweils durch eine mittels des Wickeldrahtes 7A bis 7C gebildete Verbindung durch eine kurze Verbindungsstrecke erster Art 10A, 10B, 10C charakterisiert. Für die Verbindungen der Spulen 6_{A3}, 6_{A4} für das Statorsegmentpaar 9A, 6_{B3}, 6_{B4} für 9B und 6_{C3}, 6_{C4} für 9C sind die kurzen Verbindungsstrecken der zweiten Art mit 11A bis 11C bezeichnet. Die Statorsegmentpaare, hier beispielhaft das Statorsegmentpaar 8A und das Statorsegmentpaar 9B der Statorsegmentkette A, sind ferner über eine lange Verbindung bildende Verbindungsstrecke 12A, hier der zweiten Art miteinander gekoppelt. Die einzelnen Statorsegmentpaare 8A und 9A einer Statorsegmentkette A sind dabei in Umfangsrichtung betrachtet einander gegenüberliegend, das heißt um 180 Grad versetzt zueinander angeordnet. Die Spulen eines Statorsegmentpaares, hier 6_{A1} und 6_{A2} für das Statorsegmentpaar 8A und 6_{A3}, 6_{A4} für das Statorsegmentpaar 9A sind jeweils durch einen entgegengesetzten Wickelsinn charakterisiert, um eine entsprechende Ausrichtung der entstehenden elektrischen Felder zu gewährleisten. Dies gilt in Analogie jeweils auch für die Spulen 6_{B1}, 6_{B2} des Statorsegmentpaares 8B, 6_{B3}, 6_{B4} des Statorsegmentpaares 9B, 6_{C1}, 6_{C2} des Statorsegmentpaares 8C und 6_{C3}, 6_{c4} des Statorsegmentpaares 9C.

Die über die langen Verbindungsstrecken 12A bis 12C miteinander gekoppelten Statorsegmentpaare 8A, 9A beziehungsweise 8B, 9B und 8C, 9C sind in der konkreten Ausführung gemäß Figur 1 dadurch charakterisiert, dass die am Anfang und am Ende der langen Verbindungsstrecke 12A bis 12C vorliegenden Spulen, hier jeweils 6_{A2} und 6_{A3} beziehungsweise 6_{B2}, 6_{B3} und 6_{C2}. 6_{C3} den gleichen Wickelsinn aufweisen.

Alle Spulen 6_{A1} bis 6_{A4}, 6_{B1} bis 6_{B4} und 6_{C1} bis 6_{C4} sind vorzugsweise zur Erzielung eines hohen Füllfaktors orthozyklisch mit einen Runddraht gewickelt. Die orthozyklische Wicklung ist dadurch charakterisiert, dass in optimaler Weise der zur Verfügung stehende Raum ausgenutzt wird, indem die Windungen der obereren Sputenlage in die Täler der darunter angeordneten Spulenlage abgelegt werden und die Überkreuzungen von Wickeldrähten 7A bis 7C miteinander ausschließlich in den Spulenköpfen, also außerhalb der Nuten, erfolgt.

Die mindestens zwei in Umfangsrichtung aufeinanderfolgenden Spulen einer Statorsegmentgruppe, hier der Statorsegmentpaare 8A, 9A, 8B, 9B beziehungsweise 8C, 9C sind derart gewickelt, dass die eine kurze Verbindung erzeugende Verbindungsstrecke erster Art 10A bis 10C beziehungsweise zweiter Art 11A bis 11C in der montierten Statorbaueinheit 1 axial nicht über die den Wickelkopf bildenden Spulenköpfe hinausragt. Dies wird am Beispiel des Statorsegmentpaares 8A erläutert. Dabei ist der Wickeldraht 7A im Bereich der kurzen Verbindungstrecke erster Art 10A durch einen radialen Verlauf in der Vertiefung zwischen den Spulenköpfen der Spulen 6_{A1}, 6_{A2} charakterisiert. In besonders vorteilhafter Ausführung werden die Enden der über die kurzen Verbindungen 10A beziehungsweise 11A miteinander zu koppelnden Spulen, hier beispielhaft der Spulen 6_{A1}, 6_{A2} der Statorsegmente 2_{A1}, 2_{A2} des Statorsegmentpaares 8A derart ausgebildet, dass die Wicklungen der Spule 6_{A1} des Statorsegmentes 2_{A1} im Bereich der zwischen diesen ausgebildeten gemeinsamen Nut 14A enden und somit direkt radial in den Bereich des Joches 3 und auf diesem Radius zum Anfang der in Reihe innerhalb der Statorsegmentkette A folgenden Spule, hier 6_{A2} geführt werden.

Endet die in Wicklungsrichtung vorhergehende Spule, hier beispielhaft 6_{A3}, nicht in der gemeinsamen Nut 14A, wird der Wickeldraht 7A zunächst nocheinmal über den Wickelkopf dieser Spule 6_{A3} geführt, als ob eine weitere Windung folgen würde. Am Ende der Spulenkopfquerung wird die Verbindung 11A in der Vertiefung zwischen zwei benachbarten Spulenköpfen radial in den Jochbereich geführt und gelangt auf diesem Radius zur in Wickelrichtung folgenden Spule 6_{A4} im Bereich des Innenumfanges 4 des Joches 3.

Die kurzen Verbindungen charakterisierenden Verbindungsstrecken erster Art 10A beziehungsweise der zweiten Art 11A zweier in Reihe aufeinanderfolgender Spulen, hier der Spulen 6_{A1}, 6_{A2} und 6_{A3} und 6_{A4}, verlaufen somit teilweise radial, wobei der Verlauf in etwa auf dessen Symmetrielinie in der Mitte der Nut 14A beziehungsweise 14A erfolgt, die Vertiefung zwischen zwei benachbarten Spulenköpfen nutzend. Die Wicklung der folgenden Spule 6_{A2} beziehungsweise 6_{A4} beginnt jeweils am in radialer Richtung äußeren Bereich des einzelnen Statorsegmentes, hier 2_{A2}, 2_{A4}, das heißt im Bereich axial vor dem Joch 3. In Abhängigkeit der Ausführung der Nuten 14A und der Form der Spulen, insbesondere Trapezform, liegen die Spulenenden meist im radial mittleren Nutbereich, das heißt, die äußere Lage der Spule ist nur teilweise gefüllt. Eine lange Verbindung zweiter Art 12A zur Spule 6A₃ des Statorsegmentpaares 9A erfolgt in besonders vorteilhafter Weise im radial inneren Endbereich der Statorbaueinheit 1 in dem von den äußeren Lagen der Spulen nicht genutzten Raum. Dazu wird der Wickeldraht 7A tangential an den Spulenköpfen der anderen Phasen vorbei von der Spule 6_{A2} in Richtung zur Spule 6_{A3} weitergeführt.

Derartige tangentiale Verbindungsabschnitte im Verlauf der Verbindungen zwischen einzelnen Spulen, insbesondere von kurzen Verbindungsstrecken zweiter Art 11A und lange Verbindungsstrecken zweiter Art 12A am Beispiel der Statorsegmentkette A weisen somit einen Abstand zur Stirnfläche der weichmagnetischen Polkerne in Form der jeweils beteiligten Statorsegmente 2_{A1} bis 2_{A4} auf, der dem maximalen Abstand des Wickeldrahtes 7A in der äußeren Lage der Spulen 6_{A1} bis 6_{A4} entspricht.

Die jeweilige lange Verbindung charakterisierenden Verbindungsstrecken zweiter Art, hier 12A für die Verbindung der beiden Statorsegmentpaare 8A und 9A, wird bei der in der Figur 1 dargestellten Statorbaueinheit 1 in radialer Richtung im Bereich des Innenumfanges 15 der Statorbaueinheit 1 an den Statorsegmenten der in Umfangsrichtung zwischengeordneten Statorsegmentketten B, C der anderen Phasen vorbeigeführt. Dabei wird für die Verbindungsstrecken 12A bis 12C jeweils der zur Verfügung stehende Raum in axialer Richtung genutzt, der beim Wickeln der einzelnen Spulen6_{A1} bis 6_{C4} von der Oberwicklung frei bleibt beziehungsweise der Raum der durch die in der einzelnen Wicklung vorgesehenen Stufe in den Spulenköpfen frei bleibt. Diese Stufung in den Spulen- beziehungsweise Wickelköpfen entsteht dadurch, dass die äußere beziehungsweise obere Lage bezogen auf den Außenumfang des einzelnen Statorsegmentes 2_{A1} bis 2_{C4} weniger Windungen aufweist und diese in radialer Richtung an der Statorbaueinheit 1 radial außen liegen. Die tangentiale Breite der einzelnen Spule ist in Einbaulage in der Statorbaueinheit 1 in radialer Richtung zum Außenumfang hin betrachtet größer als im Bereich des Innenumfanges 15 der Statorbaueinheit 1.

Die die langen Verbindungen charakterisierenden Verbindungsstrecken zweiter Art 12A bis 12C der einzelnen Statorsegmentketten A bis C überkreuzen sich jeweils an einer Stelle. Dabei überkreuzen sich jeweils die langen Verbindungen zweier Statorsegmentketten, beispielsweise A und B, A und C oder B und C. Diese Kreuzungspunkte sind hier mit 16.1 bis 16.3 bezeichnet und liegen vorzugsweise ebenfalls im Bereich einer Vertiefung zwischen benachbarten Spulenköpfen, das heißt die Überkreuzung erfolgt derart, dass der in axialer Richtung äuβere und überkreuzende Wicklungsdraht ausgehend von einer obersten Lage einer vorhergehenden Spule über einen entlang einer unteren Lage der gleichen Spule geführten anderen Wicklungsdraht geführt wird.

Die jeweiligen Enden des Wickeldrahtes 7A bis 7C der einzelnen Statorsegmentketten A bis C, die jeweils mit 7A1 und 7A2 beziehungsweise 7B1, 7B2 und 7C1, 7C2 bezeichnet sind, sind in axialer Richtung aus der in Funktionslage axialen Anordnungsebene der Statorsegmente 2_{A1} bis 2_{C4} herausgeführt. Die Ausrichtung erfolgt vorzugsweise im Bereich einer oberen Lage, wobei die Fixierung und Führung der Endbereiche derart erfolgt, dass diese in radialer Richtung im Bereich des Joches 3 gestützt geführt und in radialer Richtung in Mittenrichtung ausgerichtet und im Bereich der Erstreckung des Statorsegmentes 2_{A1} bis 2_{C4} aus diesem, vorzugsweise mittleren Bereich in axialer Richtung herausgeführt sind.

Die einzelnen Besonderheiten für die Ausbildung der Wicklungen einer Phase als einteilige Phasenstränge, das heißt frei von Unterbrechungen, sind in den Figuren 2 bis 3 in schematisiert vereinfachter Darstellung wiedergegeben.

Die Figur 2 verdeutlicht dabei in einer Detailansicht den radialen Verlauf der die kurze Verbindung charakterisierenden Verbindungsstrecke erster Art 10A zwischen den Spulen 6_{A1} und 6_{A2}. Erkennbar sind für das einzelne Statorsegment 2_{A1} und 2_{A2} die Ausbildungen der Spulen 6_{A1} und 6_{A2}, der Endbereich 7A1 des Wickeldrahtes 7A, der in axialer Richtung aus der Statorsegmentebene zusammen mit dem Endbereich 7C2 des Wickeldrahtes 7C der Statorsegmentkette C paarweise herausgeführt ist, wobei das Herausführen in 90 Grad Richtung aus der Ebene der Statorbaueinheit 1 und damit im Wesentlichen parallel zur Mittenachse M der Statorbaueinheit 1 erfolgt. Ferner ersichtlich ist die Ausrichtung des Endbereiches 7A1, welcher den Anfangsbereich der über den Wickeldraht 7A realisierten Reihenschaltung der einzelnen Spulen 6_{A1} bis 6_{A4} der Statorsegmentkette A bildet, bezogen auf das Statorsegment 2_{A1} an der an dieser ausgebildeten Spule 6_{A1} tangential zur Oberlage 17 der Spule 6_{A1} und aus dem Windungsbereich heraus in den Zwischenraum, hier der Nut 18 zu den Statorsegmenten des Statorsegmentpaares 9C. Der Endbereich 7A1 wird im Bereich des Jochs 3 fixiert beziehungsweise mittels entsprechender Flächenbereiche 19 des Spulenkörpers des Statorsegmentes 2_{A1} fixiert, welche hier von Vorsprüngen gebildet werden.

Die einzelnen Spulen 6_{A1} und 6_{A2} sind orthozyklisch gewickelt, wobei die Oberlagen jeweils in die durch den Querschnitt des Wickeldrahtes bedingten Zwischenräume abgelegt sind. Die Wicklung um den Umfang des einzelnen Statorsegmentes 2A₁ erfolgt in einem Winkel zur radialen Richtung. Die Führung des Wickeldrahtes 7A erfolgt dabei in Einbaulage betrachtet vom radial äußeren Bereich in Richtung zum radialen Innenumfang 15 der Statorbaueinheit und von diesem wieder zurück, wobei der Übertritt zur in Umfangsrichtung in Reihe zu dieser Spule 6A₁ geschalteten Spule 6A₂ in radialer Richtung zwischen dem Innenumfang 4 des Joches 3 und dem Innenumfang 15 der Statorbaueinheit erfolgt. Der Wickeldraht 7A wird dann über die Verbindung 10A von der Spule 6_{A1}, deren Endbereich bis in die Nut 14A verläuft, in radialer Richtung nach außen im Bereich beziehungsweise parallel zur Mittellinie der Nut 144A in den radial äußeren Jochbereich des Statorsegmentes 2A₂ geführt. Die Führung erfolgt hier innerhalb der durch die Wicklungen erzeugten Vertiefung zwischen den Spulenköpfen der einzelnen Spulen 6_{A1}, 6_{A2}.

Bezüglich der Ausführung zur kurzen Verbindung zweiter Art wird auf die Ausführungen zur Verbindung zwischen den Spulen 6_{A3}, 6_{A4} in Figur 1 verwiesen.

Eine tangentiale Führung des Wickeldrahtes 7A entsprechend der zweiten Art ist hier für das Spulenende der Spule 6_{A2} wiedergegeben. Diese endet vor dem Einlauf in die nächste in Umfangsrichtung angeordnete Nut, die zwischen dem Statorsegment 2_{A2} und dem zum Statorsegment 2_{A2} in Umfangsrichtung benachbart angeordneten Statorsegment 2_{B3} der Statorsegmentkette B gebildet wird. Diese Führung des Wickeldrahtes 7A1 wird in die Ausbildung der langen Verbindungsstrecke zweiter Art 12A zur Kopplung mit dem hier nicht dargestellten Statorsegmentpaar 9A mit einbezogen.

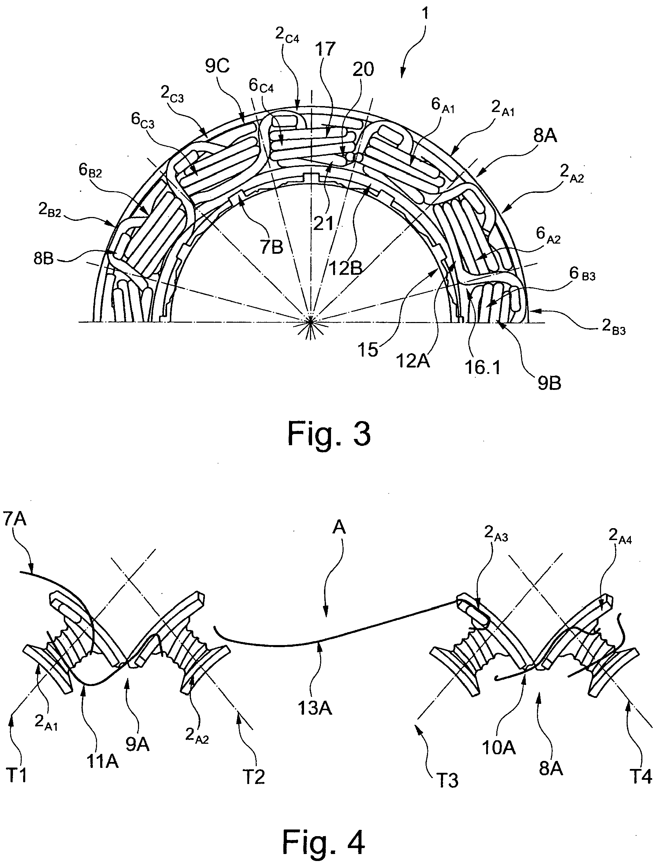

Die Figur 3 verdeutlicht beispielhaft anhand einer Detailansicht aus der Figur 1 den tangentialen Verlauf der längeren Verbindung 12B vor gestuft ausgeführten Spulenköpfen. Dabei wird hier beispielhaft der Wickeldraht 7B vom Statorsegment 2_{B2} der Statorsegmentgruppe 8A zum Statorsegment 2_{B3} der Statorsegmentgruppe 9B geführt. Erkennbar ist dabei die Führung entlang der in Umfangsrichtung zwischen diesen angeordneten Statorsegmenten, im dargestellten Ausschnitt der Statorsegmente 2_{C3}, 2_{C4,} 2_{A1}, 2_{A2}, der Phasen C und A durch den an den einzelnen Spulen 6_{C3}, 6_{C4}, 6_{A1}, 6_{A2} aufgrund der Stufung zwischen der Oberlage 17 und einer darunter liegenden Lage 20 vorgesehenen Freiraum 21. Dieser ist bezogen auf die Lage der Statorsegmente in Funktionslage im Bereich des Innenumfanges 15 der Statorbaueinheit 1 vorgesehen.

Im Kreuzungspunkt 16.1 der Verbindungsstrecke 12B mit der Verbindungsstrecke 12A quert diese die Wicklung der Spule 6_{A2}, wobei die Führung tangential an der äußeren, insbesondere Oberlage 17 der Spule 6_{A2} zumindest teilweise in radialer Richtung erfolgt. Der einzelne Kreuzungspunkt 16.1 liegt vorzugsweise im Bereich der Stufung zwischen den Wicklungslagen einer Spule, hier 6_{A2} und im Bereich der Vertiefung zwischen zwei Spulenköpfen unterschiedlicher Spulenpaare (8A, 9B) oder unmittelbar benachbart zu diesen. Dadurch kann am Kreuzungspunkt 16.1 der näher am weichmagnetischen Körper verlaufende Wicklungsdraht, hier der Wickeldraht 7B vom darüberliegenden Wickeldraht 7A in die Vertiefung zwischen den Spulenköpfen der Spulen 6_{A2} und 6_{B3} gedrückt werden, sodass der Wickeldraht 7B im Verlauf der langen Verbindung 12B axial verformt wird und der darüber verlaufende Draht 7A der langen Verbindung 12A in dem Abstand, der dem Abstand der äußeren Spulenlage entspricht, verlaufen kann. Der diesen querende Wickeldraht 7B knickt dabei aus der tangentialen Richtung nach oben und wird in der Vertiefung in radialer Richtung in den Jochbereich geführt.

Die Figuren 1 bis 3 verdeutlichen beispielhaft eine besonders vorteilhaft ausgestaltete Statorbaueinheit 1 mit drei Phasen und 12 bewickelten Polen Diese ist jedoch auch für andere Polzahlen und Anordnungen der bewickelten Statorsegmente geeignet. So können auch alle Pole einer Phase in einem Umfangssektor angeordnet werden, wodurch die langen Verbindungen entfallen. Da sich der Wickelsinn ändert, gibt es jedoch ebenfalls zwei unterschiedliche kurze Verbindungen der ersten und zweiten Art, die wie bereits beschrieben in die Vertiefungen zwischen den einzelnen Spulenköpfen einbringbar sind. Denkbar ist es ferner, die Anzahl der Pole zu variieren sowie die Anzahl der Phasen oder auch eine Staturbaueinheit mit nur langen Verbindungen der ersten oder zweiten Art aufzubauen. Weiter ist es möglich bei großen Strangquerschnitten anstatt einem Wickeldraht mehrere parallelgewickelte Drähte zu verwenden.

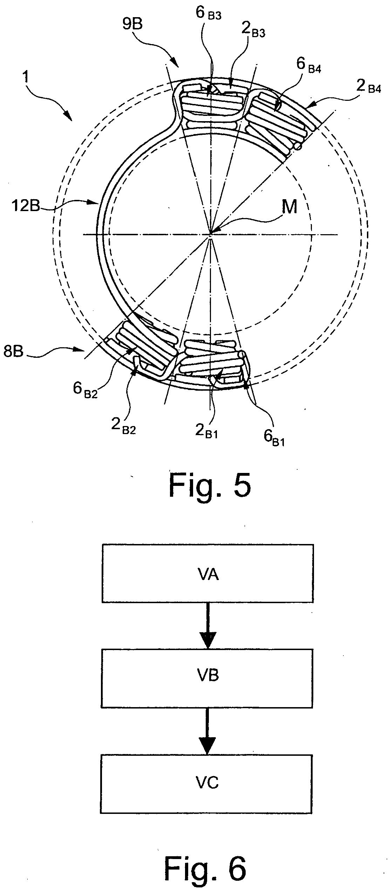

Bezüglich der Herstellung einer derartigen Statorbaueinheit bestehen grundsätzlich unterschiedliche Möglichkeiten. Alle sind jedoch dadurch charakterisiert, dass die Statorsegmente einer Statorsegmentkette A bis C, welche vorzugsweise einen Strang einer Phase beschreiben, jeweils nur einen Wickeldraht (oder parallel gewickelte Drähte) 7A, 7B, 7C frei von Unterbrechungen aufweisen, der die in Reihe geschalteten Spulen 6_{A1} bis 6_{C4} ausbildet und die Verbindungen zwischen den einzelnen in Reihe geschalteten Spulen 6_{A1} bis 6_{C4} möglichst kurz gehalten wird. Die Figur 4 verdeutlicht in schematisiert vereinfachter Darstellung anhand eines Details den Verlauf der Verbindungsstrecken am Beispiel der Verbindungsstrecke 12A bei der Herstellung und als vorgefertigte Statorsegmentkette A. Die Figur 6 verdeutlicht anhand eines Signalflußbildes den Ablauf des Verfahrens zur Herstellung einer Statorbaueinheit 1.

Dabei werden in einem ersten Verfahrensschritt VA bei allen Ausführungen die Statorsegmente einer Statorsegmentkette bereitgestellt und an einem Wickelwerkzeug zueinander ausgerichtet. Die Anordnung am Wickelwerkzeug ist schematisiert stark vereinfacht beispielhaft in Figur 4 für die Statorsegmentkette A wiedergegeben. Die Ausrichtung der einzelnen Statorsegmente 2_{A1} bis 2_{A4} entspricht im Wesentlichen bezogen auf die Umfangsrichtung der Lage, in welcher die Statorsegmente auch in der fertigen Statorbaueinheit 1 zueinander ausgerichtet sind, wobei die einzelnen über die lange Verbindungsstrecke 12A miteinander zu verbindenden Statorsegmentpaare 8A und 9A in einer Ebene oder in der tatsächlichen Lage am hier nicht dargestellten Träger eines Wickelwerkzeuges angeordnet sind. Die Ausrichtung in axialer Richtung kann jedoch unterschiedlich ausgeführt sein. Dabei werden Ausführungen der Bewicklung der Statorsegmente einer Statorsegmentkette mit feststehendem Träger und feststehendem Statorsegment und in Umfangsrichtung um die einzelnen Statorsegmente führbaren Wickelnadel zur Führung des Wickeldrahtes und Ausführungen mit gegenüber dem Wickeldraht rotierendem Statorsegment unterschieden. Vorzugsweise erfolgt die Führung des Wickeldrahtes 7A jedoch mittels einer Wickelnadel um ortsfeste Statorsegmente.

Figur 4 verdeutlicht die fertig gestellte Wicklung der Statorsegmentkette A an der nicht dargestellten Trägereinrichtung des nicht dargestellten Wickelwerkzeuges. Dargestellt sind lediglich die Tragachsen T1 bis T4 für die einzelnen Statorsegmente. Die Tragachsen T1, T2 und T3, T4 für die einander unmittelbar in Umfangsrichtung benachbarten Statorsegmente 2_{A1}, 2_{A2} und 2_{A3}, 2_{A4} sind in einem Winkel zueinander angeordnet, wobei jeweils der Jochbereich 3 der Statorsegmente des in Umfangsrichtung benachbarten Statorsegmentes 2_{A2} und 2_{A4} aus der Axialebene in einem Winkelbereich von vorzugsweise 20 Grad bis 90 Grad gegenüber dem vorhergehenden Statorsegment 2_{A1} und 2_{A3} herausgeklappt ist. Bei Statorsegmentgruppen mit einer Vielzahl von Statorsegmenten, die über kurze Verbindungsstrecken erster Art miteinander zu koppeln sind kann die Anordnung und Ausrichtung am Werkzeug wechselweise gegeneinander verkippt erfolgen. An diesen Trag- und Fixierachsen werden die Statorsegmente angeordnet und fixiert und im nachfolgenden Verfahrensschritt VB der Wickeldraht 7A in der gewünschten Weise um die einzelnen Statorsegmente 2_{A1}, 2_{A2} und 2_{A3}, 2_{A4} der Statorsegmentkette A nacheinander geführt. Dabei werden die in Umfangsrichtung einander benachbart angeordneten Statorsegmente 2_{A1}, 2_{A2} und 2_{A3}, 2_{A4} jeweils in unterschiedlicher Richtung umwickelt. Abweichend von den Statorsegmentketten in den Figuren 1 bis 3 wird in Figur 2 die Herstellung einer Statorsegmentkette dargestellzt die nach der ersten Spule eine kurzen Verbindung der 2. Art 13A aufweist und anschließend nach der zweiten Spule eine lange Verbindung der ersten Art und nach der dritten Spule eine kurze Verbindung der ersten Art. Die Reihenfolge der Statorsegmentpaare 8A und 9A ist somit vertauscht. Die in der Figur 2 dargestellte kurze Verbindung 11A wird hier durch die entsprechende Führung des Wickeldrahtes 7A aus dem in Einbaulage radial inneren Bereich des Statorsegmentes 2_{A1} in den in radialer Richtung äußeren Bereich, welcher aus der Axialebene herausgeklappt wurde, am Statorsegment 2_{A2} und damit der Folgespule 6_{A2} realisiert. Entscheidend ist, dass bei Überführung der Wickelsinn geändert wird. Ist gemäß Figur 1 die Statorsegmentkette A durch in Umfangsrichtung zueinander beabstandet beziehungsweise vorzugsweise gegenüberliegende Statorsegmentpaare charakterisiert, wird zur Realisierung der langen Verbindungsstrecke 13A der Übergang zwischen den Statorsegmentgruppen 8A, 9A an der Trägereinrichtung diese ebenfalls vorzugsweise an einem kreisförmigen Segment oder einer ebenen Fläche entlang geführt. Die anderen Statorsegmentketten B, C können analog hergestellt werden. Die Tragachsen können in einer vorteilhaften Werkzeugvariante nach dem Bewickeln der Statorsegmente derart gekippt werden, dass sich der Öffnungswinkel zwischen den Polköpfen der benachbarten Statorsegmenete auf den endgültigen Wert verringert und sich der angestrebte kleine Nutschlitz einstellt.

Nach erfolgtem Umwickeln und Erzeugung der einzelnen in Reihe geschalteten Spulen durch einen einzigen Wickeldraht 7A bis 7C für die einzelnen Statorsegmentketten A bis C liegen diese in vormontierter Form vor, die nunmehr im Verfahrensschritt VC zu einem ringförmigen Joch 3 ausrichtbar sind. Dabei kann die Montage, Ausrichtung und/oder Befestigung einer einzelnen Statorsegmentkette A bis C, hier beispielsweise für die Statorsegmentkette B, dargestellt in Figur 5 durch eine einfache Einschubbewegung in axialer Richtung erfolgen. Die einzelnen Statorsegmente 2_{B1}, 2_{B2} und 2_{B3}, 2_{B4} werden dabei in eine axiale Ebene geklappt, in welcher diese in radialer Richtung ausgerichtet sind.

Für die nächste zu montierende Statorsegmentkette A oder C sind dann schon eine Mehrzahl überlagerter Bewegungen erforderlich, um eine Montage zu gewährleisten, wobei es sich hier Axial- und Radialbewegung handelt, während für die letzte Statorsegmentkette A oder C dann eine entsprechende weitere Richtungskomponente zur Montage erforderlich ist. Insbesondere bedarf es zur Montage der letzten Statorsegmentkette einer kurzzeitigen Auslenkung der Statorsegmentpaare in radialer Richtung.

Je nach Ausführung der Verbindung zwischen den Jochbereichen der Statorsegmente kann diese kraft- oder formschlüssig erfolgen und damit lösbar oder auch unlösbar ausgebildet sein.

Das Verfahren zur Fertigung ist anhand eines Signalflussbildes in der Figur 6 wiedergegeben. Figur 6 verdeutlicht dabei im Verfahrensschritt VA die Bereitstellung des Werkzeuges und die Ausrichtung der einzelnen Statorsegmente am Werkzeug und Verfahrensschritt VB den Wickelvorgang und im Verfahrensschritt VC die Montage zu einem Ring der in ein Gehäuse eingefügt werden kann.

### Bezugszeichenliste

- 1: Statorbaueinheit
- 2A₁ - 2A₄: Statorsegmente
- 2B₁ - 2B₄: Statorsegmente
- 2C₁ - 2C₄: Statorsegmente
- 3: Joch
- 4: Stossstelle
- 6_{A1} - 6_{A4}: Spule
- 6_{B1} - 6_{B4}: Spule
- 6_{C1} - 6_{C4}: Spule
- 7A, 7B, 7C: Wickeldraht
- 7A1: erster Endbereich
- 7A2: zweiter Endbereich
- 7B1: erster Endbereich
- 7B2: zweiter Endbereich
- 7C1: erster Endbereich
- 7C2: zweiter Endbereich
- 8A, 8B, 8C: Statorsegmentpaar
- 9A, 9B, 9C: Statorsegmentpaar
- 10A, 10B, 10C: kurze Verbindung erster Art innerhalb des Statorsegmentpaares 8A, 8B, 8C
- 11A, 11B, 11C: kurze Verbindung zweiter Art innerhalb der Statorsegmentpaare 9A, 9B, 9C
- 12A, 12B, 12C: lange Verbindung zweiter Art zwischen den Statorsegmentpaaren 8, 9
- 13A: lange Verbindung erster Art
- 14A: Nut
- 15: Innenumfang
- 16.1 - 16.3: Kreuzungspunkt
- 17: Oberlage, Oberwicklung
- 18: Nut
- 19: Flächenbereich
- 20: Unterlage, Unterwicklung
- 21: Freiraum
- A, B, C: Statorsegmentketten
- M: Mittenachse
- T1-T4: Tragachsen
- VA, VB, VC: Verfahrensschritte

## Patentansprüche

1. Statorbaueinheit (1) für mehrphasige elektrische Maschinen mit einer Vielzahl von einzelnen, in Umfangsrichtung zueinander beabstandet unter Ausbildung von Nuten (14A, 18) angeordneten und mit Spulen (6A1-6A4, 6B1-6B4,6C1-6C4) bewickelten weichmagnetischen Statorsegmenten (2A1-2A4, 2B1-2B4,2C1-2C4), wobei mindestens zwei Spulen (6A1-6A4, 6B1-6B4,6C1-6C4) einer Phase in Reihe geschaltet sind,wobei wenigstens zwei Statorsegmente (2A1-2A4, 2B1-2B4,2C1-2C4) einer Phase mindestens eine Statorsegmentkette (A, B, C) bilden, wobei deren Spulen (6A1-6A4, 6B1-6B4,6C1-6C4) und die Verbindung der Spulen (6A1-6A4, 6B1-6B4,6C1-6C4) untereinander von einem durchgängigen Wickeldraht (7A, 7B, 7C) oder von wenigstens zwei parallel gewickelten Wickeldrähten (7A, 7B, 7C) gebildet werden, **dadurch gekennzeichnet,**
**, dass** zumindest ein Teil, vorzugsweise alle Verbindungsstrecken (10A, 10B, 10C, 11A, 11B, 11C, 12A, 12B, 12C) zwischen zwei aufeinanderfolgenden Spulen (6_{A1}-6_{A4},6_{B1}-6_{B4},6_{C1}-6_{C4}) einer Statorsegmentkette (A, B, C) zur Stirnfläche der Statorsegmente (2_{A1}-2_{A4}, 2_{B1}-2_{B4},2_{C1}-2_{C4}) einen Abstand in axialer Richtung aufweisen, welcher den maximalen Abstand der äußeren Lage (17) der einzelnen Spule (2_{A1}-2_{A4},2_{B1}-2_{B4},2_{C1}-2_{C4}) zur Stirnfläche der Statorsegmente (2_{A1}-2_{A4},2_{B1}-2_{B4},2_{C1}-2_{C4}) um weniger als eine Wickeldrahtstärke übertrifftoder höchstens dem maximalen Abstand der äußeren Lage (17) der einzelnen Spule (2_{A1}-2_{A4}, 2_{B1}-2_{B4},2_{C1}-2_{C4}) zur Stirnfläche der Statorsegmente (2_{A1}-2_{A4},2_{B1}-2_{B4},2_{C1}-2_{C4}) entspricht.

2. Statorbaueinheit (1) nach dem Oberbegriff von Anspruch 1, **dadurch gekennzeichnet, dass** zumindest zwei Statorsegmente (2_{A1}-2_{A4},2_{B1}-2_{B4},2_{C1}-2_{C4}) einer Statorsegmentkette (A, B, C) in Umfangsrichtung einander unmittelbar benachbart angeordnet sind, wobei die Spulen (6_{A1}-6_{A4},6_{B1}-6_{B4},6_{C1}-6_{C4}) dieser Statorsegmente (2_{A1}-2_{A4.}2_{B1}-2_{B4},2_{C1}-2_{C4}) einen gegenläufigen Wickelsinn aufweisen und die Verbindung zwischen den Spulen (6_{A1}-6_{A4}, 6_{B1}-6_{B4},6_{C1} - 6_{C4}) durch eine kurze Verbindungsstrecke erster Art oder zweiter Art (10A, 10B, 10C, 11A, 11 B, 11C) beschreibbar ist, wobei bei Verbindungsstrecken erster Art (10A, 10B, 10C) die im Phasenstrang vorgeordnete Spule (6_{A1}-6_{A4},6_{B1}-6_{B4},6_{C1} - 6_{C4}) nach dem Durchgang durch die gemeinsame Nut zum nachgeordneten Statorsegment (2_{A1}-2_{A4},2_{B1}-2_{B4},2_{C1}-2_{C4}) endet, während bei Verbindungsstrecken zweiter Art (11A, 11 B, 11 C) die im Phasenstrang vorgeordnete Spule (6_{A1}-6_{A4},6_{B1}-6_{B4},6_{C1} - 6_{C4}) vor dem Einlauf in die gemeinsame Nut zum nachgeordneten Statorsegment (2_{A1}-2_{A4},2_{B1}-2_{B4},2_{C1}-2_{C4}) endet und der Wickeldraht (7A, 7B, 7C) über die vorgeordnete Spule (6_{A1}-6_{A4},6_{B1}-6_{B4},6_{C1} - 6_{C4}) geführt werden muss.

3. Statorbaueinheit (1) nach nach dem Oberbegriff von Anspruch 1 **dadurch gekennzeichnet, dass** die Statorsegmente (2_{A1}-2_{A4},2_{B1}-2_{B4},2_{C1}-2_{C4}) einer Statorsegmentkette (A, B, C) in Umfangsrichtung um mehr als ein Statorsegment, vorzugsweise 180 Grad zueinander versetzt angeordnete Statorsegmentgruppen (8A, 8B, 8C, 9A, 9B, 9C) aus jeweils zumindest einem Statorsegment (2_{A1}-2_{A4},2_{B1}-2_{B4},2_{C1}-2_{C4}) bilden, und die Verbindung zwischen den Statorsegmentgruppen (8A, 8B, 8C, 9A, 9B, 9C) durch eine lange Verbindungsstrecke erster oder zweiter Art (12A, 12B, 12C) beschreibbar ist, wobei bei Verbindungsstrecken erster Art die letzte Spule (6_{A1}-6_{A4},6_{B1}-6_{B4},6_{C1} - 6_{C4}) einer Statorsegmentgruppe (8A, 8B, 8C, 9A, 9B, 9C) nach dem Durchgang durch die gemeinsame Nut zum nachgeordneten Statorsegment (2_{A1}-2_{A4},2_{B1}-2_{B4},2_{C1}-2_{C4}) einer anderen Statorsegmentkette (A, B, C) endet, während bei Verbindungsstrecken zweiter Art (11A, 11B, 11 C) die letzte Spule (6_{A1}-6_{A4},6_{B1}-6_{B4},6_{C1} - 6_{C4}) einer Statorsegmentgruppe (8A, 8B, 8C, 9A, 9B, 9C) vor dem Einlauf in die gemeinsame Nut zum nachgeordneten Statorsegment (2_{A1}-2_{A4},2_{B1}-2_{B4},2_{C1}-2_{C4}) einer anderen Statorsegmentkette (A, B, C) endet und der Wickeldraht (7A, 7B, 7C) über diese Spule (6_{A1}-6_{A4}, 6_{B1}-6_{B4},6_{C1} - 6_{C4}) geführt werden muss.

4. Statorbaueinheit (1) nach nach dem Oberbegriff von Anspruch 1, **dadurch gekennzeichnet, dass** zumindest ein Teilbereich der die Verbindung zwischen zwei Spulen (6_{A1}-6_{A4}, 6_{B1}-6_{B4},6_{C1}-6_{C4}) einer Statorsegmentkette (A, B, C) beschreibenden Verbindungsstrecken (10A, 10B, 10C, 11A, 11 B, 11C, 12A, 12B, 12C) zumindest teilweise in radialer Richtung in der Vertiefung (14A, 18) zwischen zwei in Umfangsrichtung einander benachbart angeordneten Spulenköpfen der Spulen (6_{A1}-6_{A4},6_{B1}-6_{B4},6_{C1}-6_{C4}) von Statorsegmenten (2_{A1}-2_{A4},2_{B1}-2_{B4},2_{C1}-2_{C4}) verlaufen.

5. Statorbaueinheit (1) nach nach dem Oberbegriff von Anspruch 1, **dadurch gekennzeichnet, dass** zumindest ein Teilbereich der die Verbindung zwischen zwei Spulen (6_{A1}-6_{A4}, 6_{B1}-6_{B4},6_{C1}-6_{C4}) einer Statorsegmentkette (A, B, C) beschreibenden Verbindungsstrecken (10A, 10B, 10C, 11A, 11 B, 11 C, 12A, 12B, 12C) zumindest teilweise in tangentialer Richtung im radial inneren Bereich der Spulen (6_{A1}-6_{A4},6_{B1}-6_{B4},6_{C1}-6_{C4}) verlaufend und in axialer Richtung innerhalb der Erstreckung der Windungen der äußeren Lage (17) einer Spule (6_{A1}-6_{A4},6_{B1}-6_{B4},6_{C1}-6_{C4}) angeordnet ist.

6. Statorbaueinheit (1) nach einem nach dem Oberbegriff von Anspruch 1, **dadurch gekennzeichnet, dass** die Kreuzungsbereiche (16.1, 16.2, 16.3) der langen Verbindungsstrecken (12A, 12B, 12C) zweier Statorsegmentketten (A, B, C) in den Vertiefungen zwischen den Spulenköpfen der Spulen (6A1-6A4, 6B1-6B4, 6C1-6C4) zweier benachbarter Statorsegmente (2A1-2A4, 2B1-2B4, 2C1-2C4) angeordnet sind.

7. Statorbaueinheit (1) nach einem der Ansprüche 1 bis 6, **dadurch gekennzeichnet**, däss die einzelnen Statorsegmente (2_{A1}-2_{A4},2_{B1}-2_{B4}, 2C1-2_{C4}) orthozyklisch gewickelt sind.

## Claims

1. Stator unit (1) for polyphase electrical machines with a plurality of individual soft-magnetic stator segments (2A1-2A4, 2B1-2B4, 2C1-2C4) which are arranged in a manner spaced apart from one another in the circumferential direction so as to form slots (14A, 18) and around which coils (6A1-6A4, 6B1-6B4, 6C1-6C4) are wound, wherein at least two coils (6A1-6A4, 6B1-6B4, 6C1-6C4) of one phase are connected in series, wherein at least two stator segments (2A1-2A4, 2B1-2B4, 2C1-2C4) of one phase form at least one stator segment chain (A, B, C), wherein the coils (6A1-6A4, 6B1-6B4, 6C1-6C4) of the said stator segment chain and the connection of the coils (6A1-6A4, 6B1-6B4, 6C1-6C4) to one another are formed by a continuous winding wire (7A, 7B, 7C) or by at least two winding wires (7A, 7B, 7C) which are wound in parallel, **characterized in that** at least some, preferably all, of the connection paths (10A, 10B, 10C, 11A, 11B, 11C, 12A, 12B, 12C) between two successive coils (6_{A1}-6_{A4}, 6_{B1}-6_{B4}, 6_{C1}-6_{C4}) of a stator segment chain (A, B, C) are at a distance from the end face of the stator segments (2A1-2A4, 2_{B1}-2_{B4}, 2_{C1}-2_{C4}) in the axial direction, the said distance exceeding the maximum distance of the outer layer (17) of the individual coil (2_{A1}-2_{A4}, 2_{B1}-2_{B4}, 2_{C1}-2_{C4}) from the end face of the stator segments (2_{A1}-2_{A4}, 2_{B1}-2_{B4}, 2_{C1}-2_{C4}) by less than a winding wire thickness or at most corresponding to the maximum distance of the outer layer (17) of the individual coil (2A1-2A4, 2_{B1}-2_{B4}, 2_{C1}-2_{C4}) from the end face of the stator segments (2_{A1}-2_{A4}, 2_{B1}-2_{B4}, 2_{C1}-2_{C4}).

2. Stator unit (1) according to the preamble of Claim 1, **characterized in that** at least two stator segments (2_{A1}-2_{A4}, 2_{B1}-2_{B4}, 2_{C1}-2_{C4}) of one stator segment chain (A, B, C) are arranged immediately adjacent to one another in the circumferential direction, wherein the coils (6_{A1}-6_{A4}, 6_{B1}-6_{B4}, 6_{C1}-6_{C4}) of these stator segments (2_{A1}-2_{A4}, 2_{B1}-2_{B4}, 2_{C1}-2_{C4}) have opposite directions of winding and the connection between the coils (6_{A1}-6_{A4}, 6_{B1}-6_{B4}, 6_{C1}-6_{C4}) can be described by a short connection path of a first kind or of a second kind (10A, 10B, 10C, 11A, 11B, 11C), wherein, in the case of connection paths of the first kind (10A, 10B, 10C), the coil (6_{A1}-6_{A4}, 6_{B1}-6_{B4}, 6_{C1}-6_{C4}) which is arranged upstream in the phase section ends after passing through the common slot with the downstream stator segment (2A1-2A4, 2_{B1}-2_{B4}, 2_{C1}-2_{C4}), while in the case of connection paths of the second kind (11A, 11B, 11C), the coil (6_{A1}-6_{A4}, 6_{B1}-6_{B4}, 6_{C1}-6_{C4}) which is arranged upstream in the phase section ends before entering the common slot with the downstream stator segment (2_{A1}-2_{A4}, 2_{B1}-2_{B4}, 2_{C1}-2_{C4}) and the winding wire (7A, 7B, 7C) has to be routed across the upstream coil (6_{A1}-6_{A4}, 6_{B1}-6_{B4}, 6_{C1}-6_{C4}).

3. Stator unit (1) according to according to the preamble of Claim 1, **characterized in that** the stator segments (2_{A1}-2_{A4}, 2_{B1}-2_{B4}, 2_{C1}-2_{C4}) of one stator segment chain (A, B, C) form stator segment groups (8A, 8B, 8C, 9A, 9B, 9C) which are arranged in a manner offset in relation to one another by more than one stator segment, preferably 180 degrees, in the circumferential direction and which each comprise at least one stator segment (2_{A1}-2_{A4}, 2_{B1}-2_{B4}, 2_{C1}-2_{C4}), and the connection between the stator segment groups (8A, 8B, 8C, 9A, 9B, 9C) can be described by a long connection path of a first or second kind (12A, 12B, 12C), wherein, in the case of connection paths of the first kind, the last coil (6_{A1}-6_{A4}, 6_{B1}-6_{B4}, 6_{C1}-6_{C4}) of one stator segment group (8A, 8B, 8C, 9A, 9B, 9C) ends after passing through the common slot with the downstream stator segment (2_{A1}-2_{A4}, 2_{B1}-2_{B4}, 2_{C1}-2_{C4}) of another stator segment chain (A, B, C), while in the case of connection paths of the second kind (11A, 11B, 11C), the last coil (6_{A1}-6_{A4}, 6_{B1}-6_{B4}, 6_{C1}-6_{C4}) of one stator segment group (8A, 8B, 8C, 9A, 9B, 9C) ends before entering the common slot with the downstream stator segment (2_{A1}-2_{A4}, 2_{B1}-2_{B4}, 2_{C1}-2_{C4}) of another stator segment chain (A, B, C) and the winding wire (7A, 7B, 7C) has to be routed across the said coil (6_{A1}-6_{A4}, 6_{B1}-6_{B4}, 6_{C1}-6_{C4}).

4. Stator unit (1) according to according to the preamble of Claim 1, **characterized in that** at least one subregion of the connection paths (10A, 10B, 10C, 11A, 11B, 11C, 12A, 12B, 12C) which describe the connection between two coils (6_{A1}-6_{A4}, 6_{B1}-6_{B4}, 6_{C1}-6_{C4}) of one stator segment chain (A, B, C) run at least partially in the radial direction in the recess (14A, 18) between two coil heads of the coils (6_{A1}-6_{A4}, 6_{B1}-6_{B4}, 6_{C1}-6_{C4}) of stator segments (2_{A1}-2_{A4}, 2_{B1}-2_{B4}, 2_{C1}-2_{C4}), which coil heads are arranged adjacent to one another in the circumferential direction.

5. Stator unit (1) according to according to the preamble of Claim 1, **characterized in that** at least one subregion of the connection paths (10A, 10B, 10C, 11A, 11B, 11C, 12A, 12B, 12C) which describe the connection between two coils (6_{A1}-6_{A4}, 6_{B1}-6_{B4}, 6_{C1}-6_{C4}) of one stator segment chain (A, B, C) is arranged so as to run at least partially in the tangential direction in the radially inner region of the coils (6_{A1}-6_{A4}, 6_{B1}-6_{B4}, 6_{C1}-6_{C4}) and in the axial direction within the extent of the turns of the outer layer (17) of one coil (6_{A1}-6_{A4}, 6_{B1}-6_{B4}, 6_{C1}-6_{C4}).

6. Stator unit (1) according to one according to the preamble of Claim 1, **characterized in that** the intersection regions (16.1, 16.2, 16.3) of the long connection paths (12A, 12B, 12C) of two stator segment chains (A, B, C) are arranged in the recesses between the coil heads of the coils (6A1-6A4, 6B1-6B4, 6C1-6C4) of two adjacent stator segments (2A1-2A4, 2B1-2B4, 2C1-2C4).

7. Stator unit (1) according to one of Claims 1 to 6, **characterized in that** the individual stator segments (2_{A1}-2_{A4}, 2_{B1}-2_{B4}, 2_{C1}-2_{C4}) are wound in an orthocyclical manner.

## Revendications

1. Module de stator (1) pour machines électriques polyphasées comportant une pluralité de segments de stator (2A1-2A4, 2B1-2B4, 2C1-2C4) magnétiques mous individuels disposés de manière espacée les uns des autres dans la direction circonférentielle en formant des encoches (14A, 18) et autour desquelles sont enroulées des bobines (6A1-6A4, 6B1-6B4, 6C1-6C4), dans lequel au moins deux bobines (6A1-6A4, 6B1-6B4, 6C1-6C4) d'une phase sont connectées en série, dans lequel au moins deux segments de stator (2A1-2A4, 2B1-2B4, 2C1-2C4) d'une phase forment au moins une chaîne de segments de stator (A, B, C), dans lequel leurs bobines (6A1-6A4, 6B1-6B4, 6C1-6C4) et la connexion des bobines (6A1-6A4, 6B1-6B4, 6C1-6C4) les unes aux autres sont formées par un fil de bobinage traversant (7A, 7B, 7C) ou par au moins deux fils de bobinage (7A, 7B, 7C) enroulés en parallèle, **caractérisé en ce qu'**au moins une partie, de préférence la totalité des liaisons de connexion (10A, 10B, 10C, 11A, 11B, 11C, 12A, 12B, 12C) entre deux bobines consécutives (6_{A1}-6_{A4}, 6_{B1}-6_{B4}, 6_{C1}-6_{C4}) d'une chaîne de segments de stator (A, B, C) présentent sur la face avant des segments de stator (2_{A1}-2_{A4}, 2_{B1}-2_{B4}, 2_{C1}-2_{C4}) un espacement dans la direction axiale qui dépasse l'espacement maximal de la couche externe (17) de la bobine individuelle (2_{A1}-2_{A4}, 2_{B1}-2_{B4}, 2_{C1}-2_{C4}) par rapport à la face avant des segments de stator (2_{A1}-2_{A4}, 2_{B1}-2_{B4}, 2_{C1}-2_{C4}) de moins d'une épaisseur de fil de bobinage ou qui correspond au plus à l'espacement maximal de la couche externe (17) de la bobine individuelle (2_{A1}-2_{A4}, 2_{B1}-2_{B4}, 2_{C1}-2_{C4}) par rapport à la face avant des segments de stator (2_{A1}-2_{A4}, 2_{B1}-2_{B4}, 2_{C1}-2_{C4}).

2. Module de stator (1) selon le préambule de la revendication 1, **caractérisé en ce qu'**au moins deux segments de stator (2_{A1}-2_{A4}, 2_{B1}-2_{B4}, 2_{C1}-2_{C4}) d'une chaîne de segments de stator (A, B, C) sont disposés de manière immédiatement adjacente les uns aux autres dans la direction circonférentielle, dans lequel les bobines (6_{A1}-6_{A4}, 6_{B1}-6_{B4}, 6_{C1}-6_{C4}) desdits segments de stator (2_{A1}-2_{A4}, 2_{B1}-2_{B4}, 2_{C1}-2_{C4}) présentent des sens d'enroulement opposés et la connexion entre les bobines (6_{A1}-6_{A4}, 6_{B1}-6_{B4}, 6_{C1}-6_{C4}) peut être décrite par une liaison de connexion courte d'un premier type ou d'un second type (10A, 10B, 10C, 11A, 11B, 11C), dans lequel, dans le cas de liaisons de connexion du premier type (10A, 10B, 10C), la bobine (6_{A1}-6_{A4}, 6_{B1}-6_{B4}, 6_{C1}-6_{C4}) disposée en amont dans le conducteur de phase se terminent après le passage à travers l'encoche commune, au segment de stator disposé en aval (2_{A1}-2_{A4}, 2_{B1}-2_{B4}, 2_{C1}-2_{C4}), alors que dans le cas de liaisons de connexion du second type (11A, 11B, 11C), la bobine (6_{A1}-6_{A4}, 6_{B1}-6_{B4}, 6_{C1}-6_{C4}) disposée en amont dans le conducteur de phase se termine en amont de l'introduction dans l'encoche commune, au segment de stator disposé en aval (2_{A1}-2_{A4}, 2_{B1}-2_{B4}, 2_{C1}-2_{C4}) et le fil de bobinage (7A, 7B, 7C) doit être amené à passer sur la bobine disposée en amont (6_{A1}-6_{A4}, 6_{B1}-6_{B4}, 6_{C1}-6_{C4}).

3. Module de stator (1) selon selon le préambule de la revendication 1, **caractérisé en ce que** les segments de stator (2_{A1}-2_{A4}, 2_{B1}-2_{B4}, 2_{C1}-2_{C4}) d'une chaîne de segments de stator (A, B, C) forment des groupes de segments de stator (8A, 8B, 8C, 9A, 9B, 9C) respectivement constitués d'au moins un segment de stator (2_{A1}-2_{A4}, 2_{B1}-2_{B4}, 2_{C1}-2_{C4}), disposés de manière décalée les uns par rapport aux autres de plus d'un segment de stator et de préférence de 180 degrés les uns par rapport aux autres dans la direction circonférentielle, et la connexion entre les groupes de segments de stator (8A, 8B, 8C, 9A, 9B, 9C) peut être décrite par une liaison de connexion longues d'un premier ou d'un second type (12A, 12B, 12C), dans lequel, dans le cas de liaisons de connexion du premier type, la dernière bobine (6_{A1}-6_{A4}, 6_{B1}-6_{B4}, 6_{C1}-6_{C4}) d'un groupe de segments de stator (8A, 8B, 8C, 9A, 9B, 9C) se termine en aval du passage à travers l'encoche commune, au segment de stator disposé en aval (2_{A1}-2_{A4}, 2_{B1}-2_{B4}, 2_{C1}-2_{C4}) d'une autre chaîne de segments de stator (A, B, C) alors que, dans le cas de liaisons de connexion du second type (11A, 11B, 11C), la dernière bobine (6_{A1}-6_{A4}, 6_{B1}-6_{B4}, 6_{C1}-6_{C4}) d'un groupe de segments de stator (8A, 8B, 8C, 9A, 9B, 9C) se termine en amont de l'introduction dans l'encoche commune, au segment de stator disposé en aval (2_{A1}-2_{A4}, 2_{B1}-2_{B4}, 2_{C1}-2_{C4}) d'une autre chaîne de segments de stator (A, B, C) et le fil de bobinage (7A, 7B, 7C) doit être amené à passer sur ladite bobine (6_{A1}-6_{A4}, 6_{B1}-6_{B4}, 6_{C1}-6_{C4}).

4. Module de stator (1) selon selon le préambule de la revendication 1, **caractérisé en ce qu'**au moins une zone partielle des liaisons de connexion (10A, 10B, 10C, 11A, 11B, 11C, 12A, 12B, 12C) décrivant la connexion entre deux bobines (6_{A1}-6_{A4}, 6_{B1}-6_{B4}, 6_{C1}-6_{C4}) d'une chaîne de segments de stator (A, B, C) s'étendent au moins partiellement en direction radiale dans l'évidement (14A, 18) entre deux têtes de bobines disposées de manière adjacente dans la direction circonférentielle des bobines (6_{A1}-6_{A4}, 6_{B1}-6_{B4}, 6_{C1}-6_{C4}) de segments de stator (2_{A1}-2_{A4}, 2_{B1}-2_{B4}, 2_{C1}-2_{C4}).

5. Module de stator (1) selon selon le préambule de la revendication 1, **caractérisé en ce qu'**au moins une zone partielle des liaisons de connexion (10A, 10B, 10C, 11A, 11B, 11C, 12A, 12B, 12C) décrivant la connexion entre deux bobines (6_{A1}-6_{A4}, 6_{B1}-6_{B4}, 6_{C1}-6_{C4}) d'une chaîne de segments de stator (A, B, C) est disposée de manière à s'étendre au moins partiellement en direction tangentielle dans la zone interne radiale des bobines (6_{A1}-6_{A4}, 6_{B1}-6_{B4}, 6_{C1}-6_{C4}) et dans la direction axiale à l'intérieur de l'étendue des enroulements de la couche externe (17) d'une bobine (6_{A1}-6_{A4}, 6_{B1}-6_{B4}, 6_{C1}-6_{C4}) d'une chaîne.

6. Module de stator (1) selon un selon le préambule de la revendication 1, **caractérisé en ce que** les zones d'intersection (16.1, 16.2, 16.3) des liaisons de connexion longues (12A, 12B, 12C) de deux chaînes de segments de stator (A, B, C) sont disposées dans les évidements entre les têtes de bobine des bobines (6A1-6A4, 6B1-6B4, 6C1-6C4) de deux segments de stator adjacents (2A1-2A4, 2B1-2B4, 2C1-2C4).

7. Module de stator (1) selon l'une quelconque des revendications 1 à 6, **caractérisé en ce que** les segments de stator individuels (2_{A1}-2_{A4}, 2_{B1}-2_{B4}, 2_{C1}-2_{C4}) sont enroulés de manière orthocyclique.
